# EUROPEAN PATENT APPLICATION

(11) **EP 4 800 246 A1**
(43) Date of publication of application: **02.09.2026**
(21) Application number: 24897529.4
(22) Date of filing: 26.11.2024
(51) Int. Cl.: F04B 53/14, F04B 39/00, F16J 9/20

(54) **RECIPROCATING PUMP**

(30) Priority: 29.11.2023 JP 2023201753
(71) Applicant: Mitsubishi Heavy Industries, Ltd., Chiyoda-ku Tokyo 100-8332 (JP)
(72) Inventor: NISHIDA, Hideaki, Tokyo 100-8332 (JP); MITSUDA, Kimihiko, Tokyo 100-8332 (JP); ASAI, Hideaki, Tokyo 100-8332 (JP); MATSUBAYASHI, Toshiki, Tokyo 100-8332 (JP)
(74) Representative: Studio Torta S.p.A.
(86) International application number: PCT/JP2024/041786
(87) International publication number: WO 2025/115845

(57) **Abstract**

A reciprocating pump includes a pump body including a piston that compresses liquid and a cylinder that covers the piston from an outer side, a drive unit that causes the piston to reciprocate in a reciprocating direction, and a piston ring provided in a gap between the piston and the cylinder, in which an annular groove is formed on an outer-peripheral surface of the piston, a space in the cylinder is partitioned, by the piston ring, into a high-pressure region in which the compressed liquid flows and a low-pressure region having a lower internal pressure than the high-pressure region, the piston ring includes a high-pressure side ring disposed on a high-pressure region side in the annular groove and a low-pressure side ring provided on a low-pressure region side in the annular groove with respect to the high-pressure side ring, and a notch surface that recedes toward the high-pressure region side is formed on an end edge on an outer-peripheral side of a surface of the low-pressure side ring facing the low-pressure region side.

## Description

### TECHNICAL FIELD

The present disclosure relates to a reciprocating pump.

Priority is claimed on Japanese Patent Application No. 2023-201753, filed November 29, 2023, the content of which is incorporated herein by reference.

### BACKGROUND ART

A reciprocating pump has been used as a device for compressing liquid hydrogen. This type of pump can raise a pressure of the liquid hydrogen to about 90 Mpa, for example. Specifically, the reciprocating pump mainly includes a piston that reciprocates in an axial direction and a cylinder that covers the piston from an outer side. The piston reciprocates in the cylinder to sequentially compress the liquid hydrogen, and the liquid hydrogen is taken out to the outside. A drive unit drives the piston.

On an outer-peripheral surface of the piston, an annular groove extending in a circumferential direction thereof is formed, and a piston ring is inserted into the annular groove. The piston ring is configured of a high-pressure side ring and a low-pressure side ring, for example, as described in Patent Document 1 below. In general, a surface facing a reciprocating direction has a flat shape in any of the rings.

### Citation List

### Patent Document

Patent Document 1: Japanese Patent No. 6424369

### SUMMARY OF INVENTION

### Technical Problem

Here, in a case where an end surface of the low-pressure side ring has a flat shape, a pressure (for example, about 90 MPa) on a high-pressure region side may deform an end edge on an outer-peripheral side of the low-pressure side ring to be pushed toward an inner side of a gap (that is, low-pressure region side). Then, a contact area between an outer-peripheral surface of the low-pressure side ring and an inner-peripheral surface of the cylinder is reduced by an amount of the deformation. As a result, there is a problem of reduction in sealability and occurrence of uneven wear on the ring outer-peripheral surface.

The present disclosure provides a reciprocating pump including a piston ring that exhibits higher sealing performance.

### Solution to Problem

A reciprocating pump according to the present disclosure includes a pump body including a piston that compresses liquid and a cylinder that covers the piston from an outer side, a drive unit that causes the piston to reciprocate in a reciprocating direction with respect to the cylinder, and a piston ring provided in a gap between the piston and the cylinder, in which an annular groove that is concave toward an inner-peripheral side and extends in a circumferential direction of an outer-peripheral surface of the piston is formed on the outer-peripheral surface, a space in the cylinder is partitioned, by the piston ring, into a high-pressure region in which the compressed liquid flows and a low-pressure region having a lower internal pressure than the high-pressure region, the piston ring includes a high-pressure side ring disposed on a high-pressure region side in the annular groove, and a low-pressure side ring provided on a low-pressure region side in the annular groove with respect to the high-pressure side ring, and a notch surface that recedes toward the high-pressure region side is formed on an end edge on an outer-peripheral side of a surface of the low-pressure side ring facing the low-pressure region side.

### Advantageous Effects of Invention

According to the present disclosure, it is possible to provide the reciprocating pump including the piston ring that exhibits the higher sealing performance.

### BRIEF DESCRIPTION OF DRAWINGS

[FIG. 1] A longitudinal sectional view of a configuration of a reciprocating pump according to a first embodiment of the present disclosure.
[FIG. 2] An enlarged cross-sectional view of a main part of the reciprocating pump according to the first embodiment of the present disclosure.
[FIG. 3] A perspective view of a configuration of a low-pressure side ring according to the first embodiment of the present disclosure.
[FIG. 4] A plan view of a configuration of a piston ring according to the first embodiment of the present disclosure.
[FIG. 5] An explanatory view of dimensions of a main part of the reciprocating pump according to the first embodiment of the present disclosure.
[FIG. 6] An enlarged cross-sectional view of a main part of a reciprocating pump according to a second embodiment of the present disclosure.
[FIG. 7] An enlarged cross-sectional view of a main part of a reciprocating pump according to a third embodiment of the present disclosure.
[FIG. 8] An enlarged cross-sectional view of a main part of a first modification example of the reciprocating pump according to each embodiment of the present disclosure.
[FIG. 9] An enlarged cross-sectional view of a main part of a second modification example of the reciprocating pump according to each embodiment of the present disclosure.
[FIG. 10] An enlarged cross-sectional view of a main part of a third modification example of the reciprocating pump according to each embodiment of the present disclosure.
[FIG. 11] An explanatory view of behavior of the piston ring under a high pressure according to a reference example.

### DESCRIPTION OF EMBODIMENTS

### <First Embodiment>

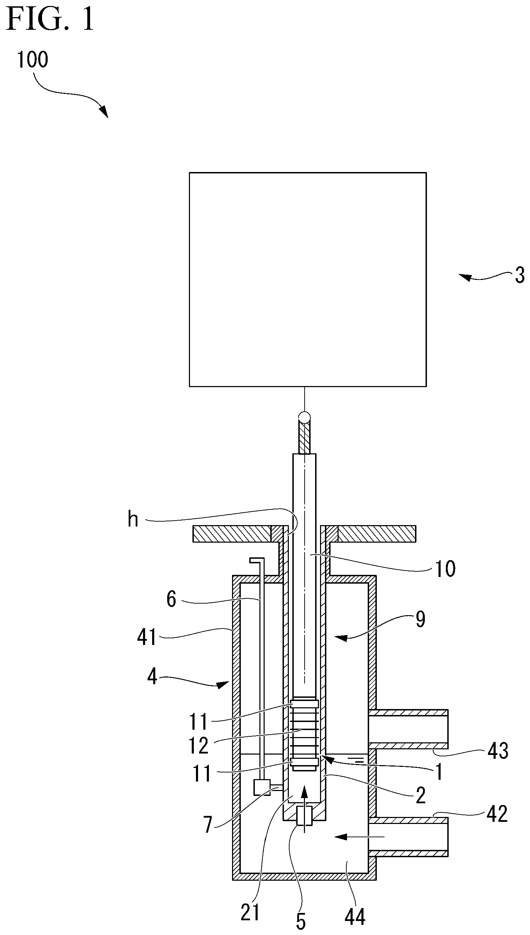

Hereinafter, a reciprocating pump 100 according to a first embodiment of the present disclosure will be described with reference to FIGS. 1 to 5.

### (Configuration of Reciprocating Pump 100)

The reciprocating pump 100 is a device for raising a pressure of liquid at an extremely low temperature, such as liquid hydrogen, to a high pressure (about 90 MPa). As shown in FIG. 1, the reciprocating pump 100 includes a piston 1, a cylinder 2, a drive unit 3, a casing 4, a check valve 5, a discharge pipe 6, and a discharge valve 7. The piston 1 and the cylinder 2 configure a pump body 9.

### (Configuration of Piston 1)

The piston 1 has a piston body 10 formed in a columnar shape that extends in an up-down direction and is centered on an axis O, a wear ring 11 that is attached to the piston body 10, and a piston ring 12. A dimension of the piston body 10 in a radial direction is constant over the entire region in an axis O direction. The wear ring 11 is provided at a tip portion of the piston body 10. The wear ring 11 has an annular shape centered on the axis O and is made of a resin material.

One wear ring 11 is provided at an end portion below the piston body 10, and one more wear ring 11 is provided at a spacing from the wear ring 11 in the axis O direction. A plurality of (six as an example) piston rings 12 arranged at spacings in the axis O direction are provided between the pair of wear rings 11. The wear ring 11 is provided to guide the piston body 10 along an inner-peripheral surface of the cylinder 2, which will be described below. On the other hand, the piston ring 12 is provided to maintain liquid-tightness and airtightness between the piston ring 12 and the inner-peripheral surface of the cylinder 2. A configuration of the piston ring 12 will be described below.

### (Configuration of Cylinder 2)

The cylinder 2 has a bottomed cylindrical shape that covers the piston 1 from an outer-peripheral side thereof. The piston 1 is inserted into the cylinder 2 from an opening portion h above the cylinder 2. A space below a tip portion of the piston 1 inside the cylinder 2 is a compression chamber 21. A check valve 5 for guiding the liquid hydrogen to the compression chamber 21 is provided at a bottom portion of the cylinder 2. The check valve 5 can allow the liquid hydrogen to flow only in a direction from the outside of the cylinder 2 toward the inside of the compression chamber 21. In other words, even in a case where a pressure of the compression chamber 21 increases, the liquid hydrogen does not flow out of the cylinder 2 through the check valve 5.

The discharge pipe 6 is connected to a portion that is a side surface of the cylinder 2 and faces the compression chamber 21. The discharge pipe 6 is provided to take out the liquid hydrogen compressed in the compression chamber 21 to the outside of the cylinder 2. The discharge valve 7 is provided on the discharge pipe 6. The discharge valve 7 can allow the liquid hydrogen to flow only in a direction from the compression chamber 21 toward the outside in a case where the pressure in the compression chamber 21 is equal to or larger than a predetermined value.

### (Configuration of Drive Unit 3)

The drive unit 3 applies a driving force to the piston 1 described above in the cylinder 2, which reciprocates the piston 1 in the axis O direction. The drive unit 3 causes the piston 1 to reciprocate in the cylinder 2 by an electric motor and a link mechanism (not shown).

### (Configuration of Casing 4)

The casing 4 is a container that covers the cylinder 2 described above from the outside. The casing 4 has a casing body 41 formed in a bottomed tubular shape, a supply pipe 42, and a gas discharge pipe 43. The supply pipe 42 is for guiding the liquid hydrogen from an external supply source into the casing body 41 (liquid storage chamber 44). The supply pipe 42 is provided in the vicinity of a bottom surface of the casing body 41. The gas discharge pipe 43 is provided to discharge a component vaporized in the liquid storage chamber 44 (gas component) to the outside. The gas discharge pipe 43 is provided at a position separated upward from the supply pipe 42. Further, a liquid surface of the liquid hydrogen in the liquid storage chamber 44 is adjusted to be positioned below the gas discharge pipe 43. The discharge pipe 6 described above extends to the outside of the casing 4.

### (Configuration of Piston Ring 12)

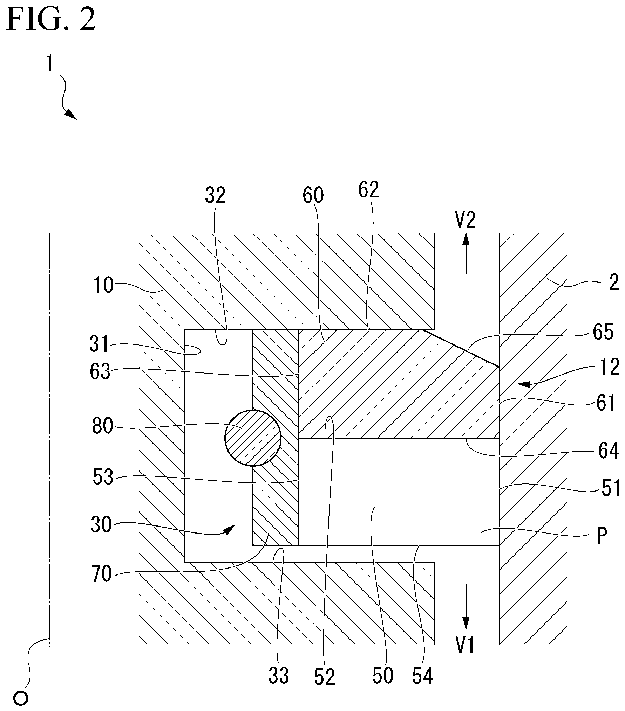

Next, the configuration of the piston ring 12 will be described in detail with reference to FIGS. 2 to 5. The piston ring 12 partitions a space in the cylinder 2 into a high-pressure region V1 and a low-pressure region V2 that are continuous in the axis O direction. The high-pressure region V1 is on a side of the compression chamber 21 in the cylinder 2, and the low-pressure region V2 is positioned opposite to the compression chamber 21 with the piston ring 12 interposed therebetween. In the following description, a high-pressure region V1 side may be simply referred to as "high-pressure side", and a low-pressure region V2 side may be simply referred to as "low-pressure side".

As shown in FIG. 2, the piston ring 12 is accommodated in an annular groove 30 formed on an outer-peripheral surface of the piston body 10. The annular groove 30 that has a rectangular cross section extends in a circumferential direction centered on the axis O and is concave on an inner-peripheral side. The annular groove 30 is formed by a bottom wall surface 31, a low-pressure side wall surface 32, and a high-pressure side wall surface 33. The bottom wall surface 31 faces the outer-peripheral side and has a cylindrical surface shape centered on the axis O. The low-pressure side wall surface 32 has an annular shape that spreads from an end edge of the bottom wall surface 31 on the low-pressure side (that is, upper side) toward the outer-peripheral side. In a cross-sectional view including the axis O, the low-pressure side wall surface 32 extends in the radial direction. The high-pressure side wall surface 33 has an annular shape that spreads from an end edge of the bottom wall surface 31 on the high-pressure side (that is, lower side) toward the outer-peripheral side. In the cross-sectional view including the axis O, the high-pressure side wall surface 33 extends in the radial direction.

The piston ring 12 has a high-pressure side ring 50, a low-pressure side ring 60, a backup ring 70, and a spring member 80. The high-pressure side ring 50 is disposed on the high-pressure side in the annular groove 30, that is, on a lower side in the up-down direction. The low-pressure side ring 60 is disposed on the low-pressure side in the annular groove 30, that is, above the high-pressure side ring 50. The high-pressure side ring 50 and the low-pressure side ring 60 are in contact with each other in the axis O direction.

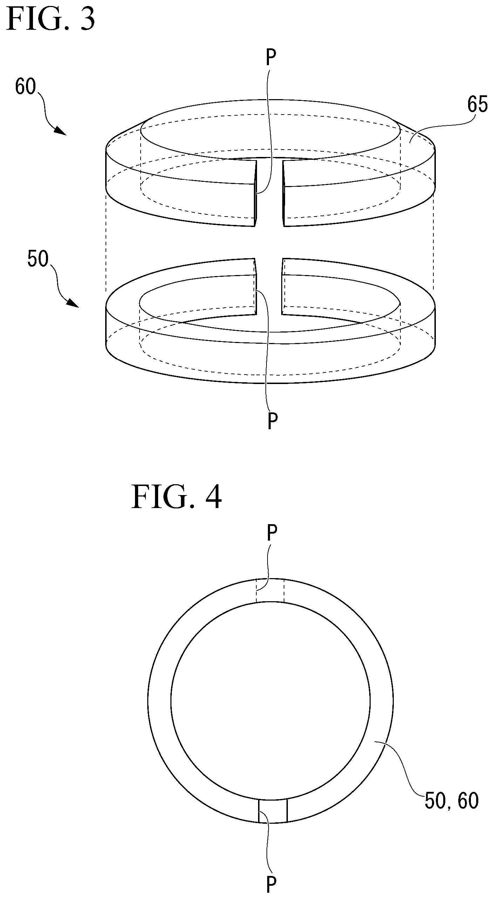

As shown in FIG. 3, the low-pressure side ring 60 has the annular shape centered on the axis O. Further, an opening referred to as a joint P is formed in a part of the low-pressure side ring 60 in a circumferential direction. The joint P is provided to fit the low-pressure side ring 60 that is caused to be deformed to be widened into the annular groove 30 of the piston body 10 from the outer-peripheral side. The high-pressure side ring 50 also has an annular shape with the same joint P as the low-pressure side ring 60. On the other hand, as shown in FIG. 4, the joint P of the high-pressure side ring 50 and the joint P of the low-pressure side ring 60 are located at positions different by 180° in the circumferential direction. That is, in a case where the joints P overlap each other, liquid leakage occurs through the joint P. In order to prevent the leakage, the phases of the joints P are different from each other as described above.

As shown in FIG. 2, the high-pressure side ring 50 has a first outer-peripheral surface 51, a first contact surface 52, a first inner-peripheral surface 53, and a first bottom surface 54. The first outer-peripheral surface 51 faces the outer-peripheral side and has a cylindrical surface shape centered on the axis O in the circumferential direction. The first outer-peripheral surface 51 slides in the axis O direction in conjunction with the reciprocating motion of the piston 1 while being in surface contact with the inner-peripheral surface of the cylinder 2. The first contact surface 52 faces the low-pressure side (that is, upper side) and has the annular shape centered on the axis O. The first contact surface 52 spreads in the radial direction with respect to the axis O, in the cross-sectional view including the axis O. The first contact surface 52 is in surface contact with the low-pressure side ring 60. The first inner-peripheral surface 53 faces the inner-peripheral side and has the cylindrical surface shape centered on the axis O in the circumferential direction. The first bottom surface 54 faces the high-pressure side and faces the high-pressure side wall surface 33 of the annular groove 30.

The low-pressure side ring 60 has a second outer-peripheral surface 61, a second contact surface 62, a second inner-peripheral surface 63, a second bottom surface 64, and a notch surface 65. The second outer-peripheral surface 61 faces the outer-peripheral side and has the cylindrical surface shape centered on the axis O in the circumferential direction. The second outer-peripheral surface 61 slides in the axis O direction in conjunction with the reciprocating motion of the piston 1 while being in surface contact with the inner-peripheral surface of the cylinder 2. The second contact surface 62 faces the low-pressure side (that is, upper side) and has the annular shape centered on the axis O. The second contact surface 62 spreads in the radial direction with respect to the axis O, in the cross-sectional view including the axis O. The second contact surface 62 is in surface contact with the low-pressure side wall surface 32 of the annular groove 30. The second inner-peripheral surface 63 faces the inner-peripheral side and has the cylindrical surface shape centered on the axis O in the circumferential direction. The second bottom surface 64 faces the high-pressure side and is in surface contact with the first contact surface 52 of the high-pressure side ring 50.

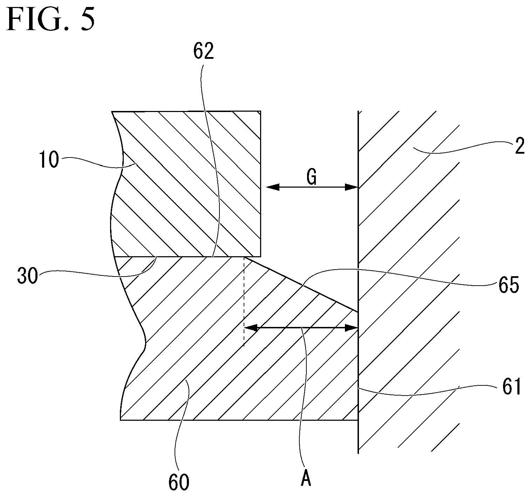

The notch surface 65 spreads between the second contact surface 62 and the second outer-peripheral surface 61. The notch surface 65 recedes toward the high-pressure side, in the cross-sectional view including the axis O. More specifically, the notch surface 65 extends from the low-pressure side toward the high-pressure side as the notch surface 65 goes from the inner-peripheral side toward the outer-peripheral side. In the present embodiment, an angle formed by the notch surface 65 with respect to the axis O is constant over the entire region in the radial direction. Further, as shown in FIG. 5, in a case where a dimension of a gap in the radial direction between the outer-peripheral surface of the piston body 10 and the inner-peripheral surface of the cylinder 2 is denoted by G, a dimension A of the notch surface 65 in the radial direction is set to satisfy G ≤ A ≤ 2G. That is, an end edge of the notch surface 65 on the inner-peripheral side is located at the same radial position as an end edge of the low-pressure side wall surface 32 of the annular groove 30 on the outer-peripheral side, or is located on a radial inner side with respect to the end edge on the outer-peripheral side. More desirably, G ≤ A ≤ 1.8G. Most desirably, G ≤ A ≤ 1.5G. Further, in the present embodiment, a dimension of the low-pressure side ring 60 in the axis O direction is equivalent to a dimension of the high-pressure side ring 50 in the axis O direction. The term "same" or "equivalent" as used herein refers to substantial identity, and a slight error is allowed.

A resin material is suitably used as a material for constituting the high-pressure side ring 50 and the low-pressure side ring 60. Specifically, a resin material having, as a main component, at least one selected from a group including polytetrafluoroethylene (PTFE), polyimide (PI), polyamide-imide (PAI), polyphthalamide (PPA), polyphenylene sulfide (PPS), polysulfone (PSU), and polyethersulfone (PES) is suitably used. Since these resin materials are relatively soft, it is possible to realize seizure prevention during sliding with the cylinder 2 and flame retardancy in a case where liquid is a flammable substance.

As shown in FIG. 2, the backup ring 70 is provided on the inner-peripheral side of the high-pressure side ring 50 and the low-pressure side ring 60. The backup ring 70 has the annular shape centered on the axis O. A dimension of the backup ring 70 in the axis O direction is equivalent to a total of dimensions of the high-pressure side ring 50 and the low-pressure side ring 60 in the axis O direction. The backup ring 70 is biased from the inner-peripheral side by the spring member 80. The spring member 80 is an elastic body formed in an annular shape that biases the backup ring 70 to expand toward the outer-peripheral side. The high-pressure side ring 50 and the low-pressure side ring 60 are configured to normally slide on the inner-peripheral surface of the cylinder 2 by being pressed from the inner-peripheral side by the backup ring 70 and the spring member 80. Thus, a certain space is formed between the inner-peripheral surface of the backup ring 70 and the bottom wall surface 31 of the annular groove 30.

### (Action and Effect)

In an operation of the reciprocating pump 100, first, the drive unit 3 causes the piston 1 to reciprocate in the cylinder 2 in a state where the liquid hydrogen is supplied into the cylinder 2 by the supply pipe 42. Accordingly, the liquid hydrogen in the cylinder 2 is sequentially compressed to be in a high-pressure state. The liquid hydrogen in the high-pressure state is taken out to the outside through the discharge pipe 6.

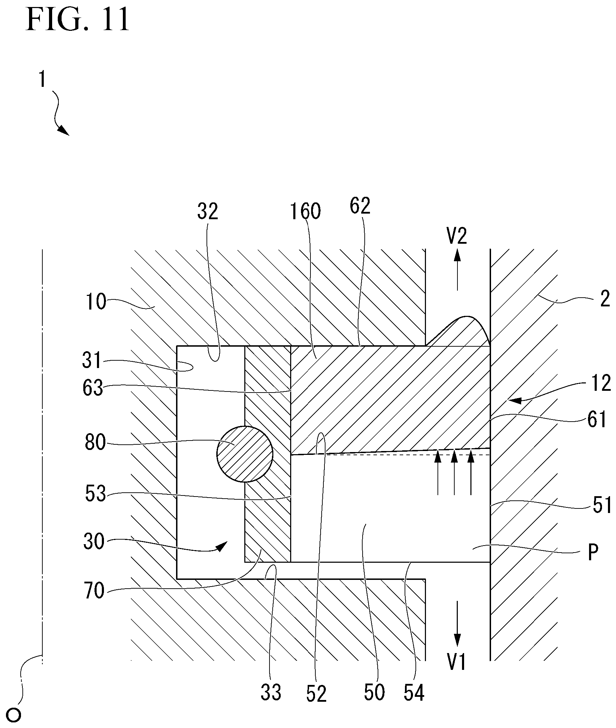

Unlike the above configuration, in a case where the notch surface 65 is not formed and the end surface of the low-pressure side ring 160 has a flat shape, the end edge of the low-pressure side ring 160 on the outer-peripheral side may be deformed to be pushed toward an inner side of the gap (that is, low-pressure region V2 side) by a pressure on the high-pressure region V1 side (for example, approximately 90 MPa). (refer to reference example shown in FIG. 11). Then, a contact area between the outer-peripheral surface of the low-pressure side ring 160 and the inner-peripheral surface of the cylinder 2 is reduced by an amount of the deformation. As a result, there is a problem that sealing performance of the low-pressure side ring 160 deteriorates, or there is a problem that uneven wear occurs on the outer-peripheral surface of the low-pressure side ring 160. In order to solve this problem, each of the above configurations is employed in the present embodiment.

With the above configuration, the notch surface 65 is formed in advance in the region on the outer-peripheral side that is easily deformed by the pressure. Accordingly, even in a case where a high pressure is applied to the end edge on the outer-peripheral side, the deformation toward the low-pressure region V2 side can be allowed to a certain extent by an amount of the notch. Therefore, it is possible to reduce the possibility that a part of the low-pressure side ring 60 is pushed into the gap between the piston 1 and the cylinder 2. As a result, the reduction in the contact area between the low-pressure side ring 60 and the cylinder 2 is avoided. Further, it is possible to avoid detaching of the deformed portion. Therefore, it is possible to avoid the deterioration in the sealing performance, and thus to stably operate the reciprocating pump 100 for a long period of time.

The notch surface 65 extends from the low-pressure region V2 side toward the high-pressure region V1 side as the notch surface 65 goes from the inner-peripheral side toward the outer-peripheral side.

With the above configuration, the notch surface 65 extends from the low-pressure side toward the high-pressure side as the notch surface 65 goes from the inner-peripheral side toward the outer-peripheral side. Accordingly, the notch surface 65 can be formed simply by performing chamfering, and thus it is possible to realize ease of process. Therefore, it is possible to reduce costs required for maintenance or manufacturing of the reciprocating pump 100.

With the above configuration, the dimension of the notch surface 65 in the radial direction is within a range equal to or larger than the dimension of the gap between the piston 1 and the cylinder 2 in the radial direction and equal to or less than twice the dimension of the gap in the radial direction. Accordingly, a margin is provided, and thus it is possible to avoid the deformation of the low-pressure side ring 60 and the deterioration in the sealing performance caused by the deformation. Therefore, it is possible to continue to stably operate the reciprocating pump 100 for a longer period of time.

The first embodiment of the present disclosure has been described above. Various changes or modifications can be made to each of the above configurations without departing from the gist of the present disclosure.

### <Second Embodiment>

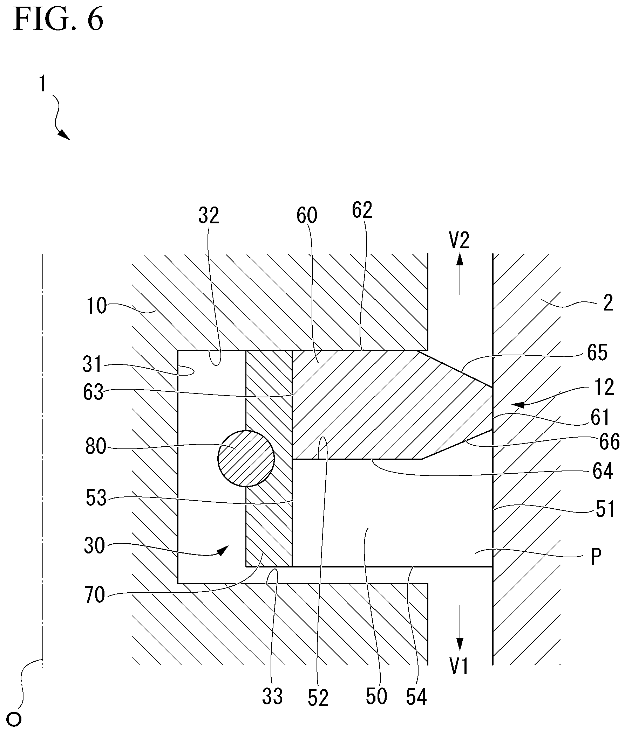

Next, a second embodiment of the present disclosure will be described with reference to FIG. 6. The same reference numerals will be assigned to the same configurations as those of the first embodiment, and detailed descriptions thereof will be omitted.

As shown in FIG. 6, in the present embodiment, a cross-sectional shape of the low-pressure side ring 60 is different from that of the first embodiment. Specifically, the low-pressure side ring 60 further has a second notch surface 66, in addition to the second outer-peripheral surface 61, the second contact surface 62, the second inner-peripheral surface 63, the second bottom surface 64, and the notch surface 65 described above.

The second notch surface 66 is provided between the second bottom surface 64 and the second outer-peripheral surface 61. The second notch surface 66 recedes toward the low-pressure side. More specifically, in the cross-sectional view including the axis O, the second notch surface 66 extends from the high-pressure side to the low-pressure side as the second notch surface 66 goes from the inner-peripheral side toward the outer-peripheral side. An angle formed by the second notch surface 66 with respect to the axis O is constant over the entire region in the radial direction. Further, it is desirable that a dimension of the second notch surface 66 in the radial direction is set to fall within the same numerical range as the dimension of the notch surface 65 in the radial direction described in the first embodiment.

### (Action and Effect)

With the above configuration, the second notch surface 66 is also formed on the surface facing the low-pressure region V2 side, in addition to the notch surface 65 formed on the surface facing the low-pressure region V2 side. Accordingly, it is possible to avoid the deterioration in the sealing performance caused by a part of the ring being pushed into the gap between the piston 1 and the cylinder 2, and it is not necessary to define an assembly direction of the low-pressure side ring 60 during assembly work. Therefore, it is possible to realize efficiency improvement and acceleration of the assembly work. Further, it is possible to reduce the possibility of malfunction or the like of a final product due to an error in assembly.

The second embodiment of the present disclosure has been described above. Various changes or modifications can be made to each of the above configurations without departing from the gist of the present disclosure.

### <Third Embodiment>

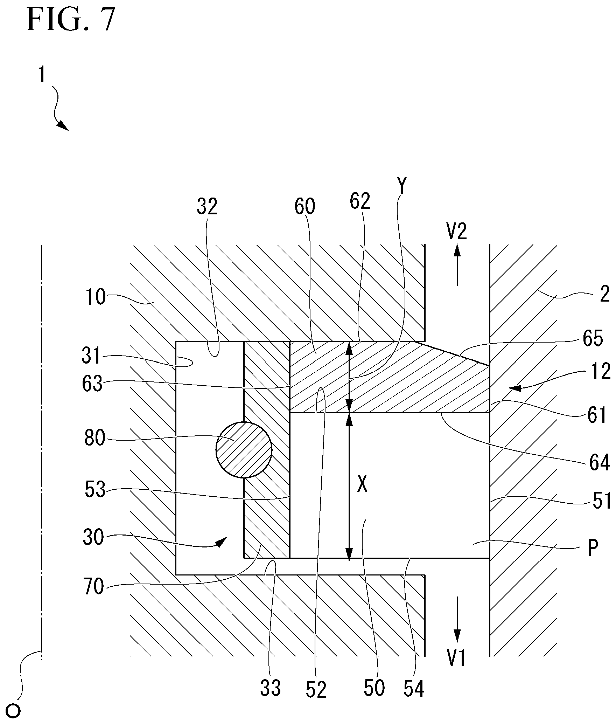

Subsequently, a third embodiment of the present disclosure will be described with reference to FIG. 7. The same reference numerals will be assigned to the same configurations as those in each of the above embodiments, and detailed description thereof will be omitted.

In the present embodiment, the shapes of the high-pressure side ring 50 and the low-pressure side ring 60 (that is, configurations of surfaces of these rings) are the same as those in the first embodiment described above. On the other hand, the dimensions of the high-pressure side ring 50 and the low-pressure side ring 60 in the axis O direction are different from those in the first embodiment. Specifically, in a case where the dimension of the high-pressure side ring 50 in the axis O direction is defined as X and the dimension of the low-pressure side ring 60 in the axis O direction is defined as Y, X ≥ 1.5Y is satisfied. More desirably, X ≥ 1.7Y. Most desirably, X ≥ 2.0Y.

### (Action and Effect)

In the high-pressure side ring 50 and the low-pressure side ring 60, the openings (joints P) for fitting these members into the piston 1 are formed in a part in the circumferential direction. The high-pressure side ring 50 and the low-pressure side ring 60 are generally assembled such that the positions of the joint P of the high-pressure side ring 50 and the joint P of the low-pressure side ring 60 in the circumferential direction are different by 180°. Incidentally, the low-pressure side ring 60 may be worn toward a radial inner side by the operation over time. Then, the joint P of the low-pressure side ring 60 is deformed to spread to both sides in the circumferential direction. As a result, a part of the high-pressure side ring 50 is deformed to bulge toward the low-pressure region V2 side through the joint P, and finally there is a possibility that the high-pressure side ring 50 is damaged. However, with the above configuration, since the dimension of the high-pressure side ring 50 in the reciprocating direction is set to be larger than the dimension of the low-pressure side ring 60, rigidity of the high-pressure side ring 50 is improved. Accordingly, it is possible to reduce the likelihood of the deformation at the joint P as described above. Therefore, the deterioration or deformation of the piston ring 12 due to the operation over time is suppressed, and thus it is possible to continue to stably operate the reciprocating pump 100 for a longer period of time.

### <Other Embodiments>

Each of the embodiments of the present disclosure has been described above. Various changes or modifications can be made to each of the above configurations without departing from the gist of the present disclosure.

### <First Modification Example>

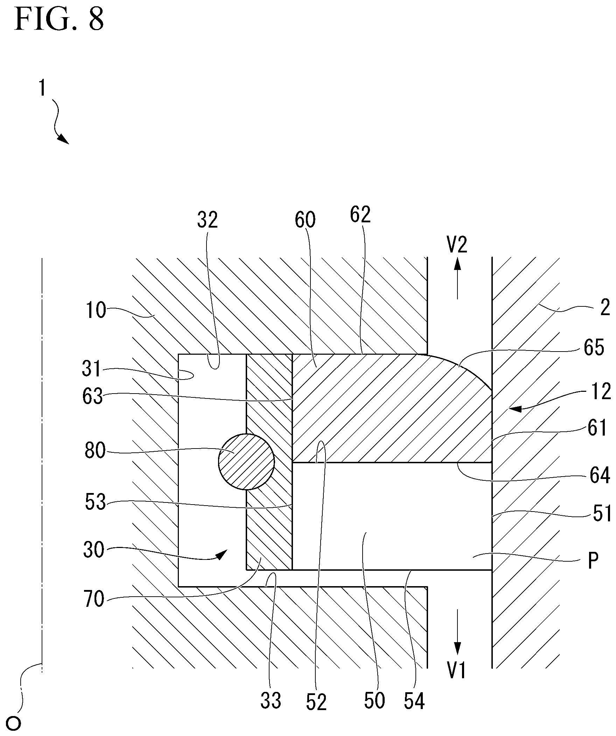

As a first modification example of the low-pressure side ring 60, a configuration shown in FIG. 8 can also be employed. In the example of FIG. 8, the notch surface 65 has a convex curved-surface shape that is convex toward the low-pressure side. The notch surface 65 may have an arc shape or a curved surface whose curvature gradually changes. Further, this modification example can be employed in combination with any of the first to third embodiments described above.

With the above configuration, since the notch surface 65 has the convex curved-surface shape that is convex toward the low-pressure region V2 side, it is possible to avoid stress concentration in the notch surface 65. On the contrary, in a case where a corner portion is formed at the end edge of the notch surface 65 on the outer-peripheral side or the inner-peripheral side, there is a possibility that the stress concentration occurs at the corner portion and a defect such as a crack occurs. However, with the above configuration, since such a corner portion is not formed, it is possible to significantly reduce the possibility that the stress concentration occurs. As a result, it is possible to continue to stably operate the reciprocating pump 100 for a longer period of time.

### <Second Modification Example>

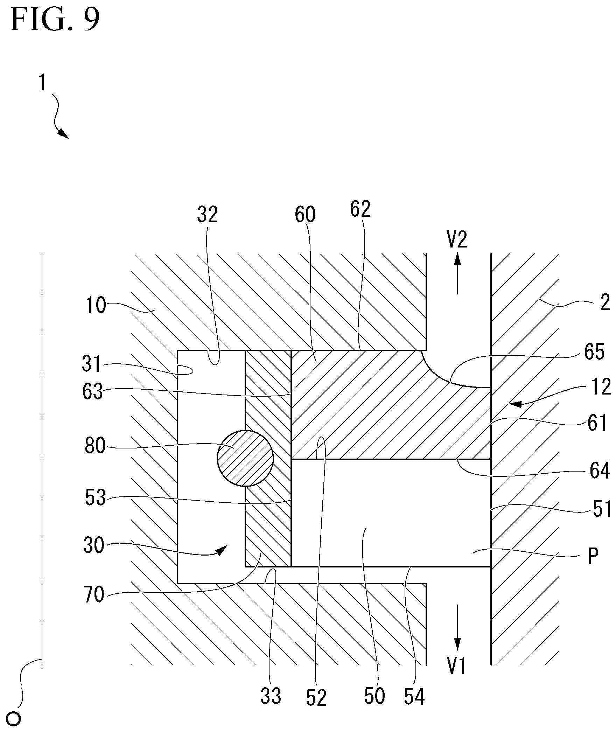

As a second modification example of the low-pressure side ring 60, a configuration shown in FIG. 9 can also be employed. In the example of FIG. 9, the notch surface 65 has a concave curved-surface shape that is concave toward the high-pressure side. The notch surface 65 may have an arc shape or a curved surface whose curvature gradually changes. Further, this modification example can be employed in combination with any of the first to third embodiments described above.

With the above configuration, since the notch surface 65 has the concave curved-surface shape that is concave toward the high-pressure region V1 side, it is possible to avoid the stress concentration in the notch surface 65. On the contrary, in a case where a corner portion is formed at the end edge of the notch surface 65 on the outer-peripheral side or the inner-peripheral side, there is a possibility that the stress concentration occurs at the corner portion and a defect such as a crack occurs. However, with the above configuration, since such a corner portion is not formed, it is possible to significantly reduce the possibility that the stress concentration occurs. As a result, it is possible to continue to stably operate the reciprocating pump 100 for a longer period of time.

### <Third Modification Example>

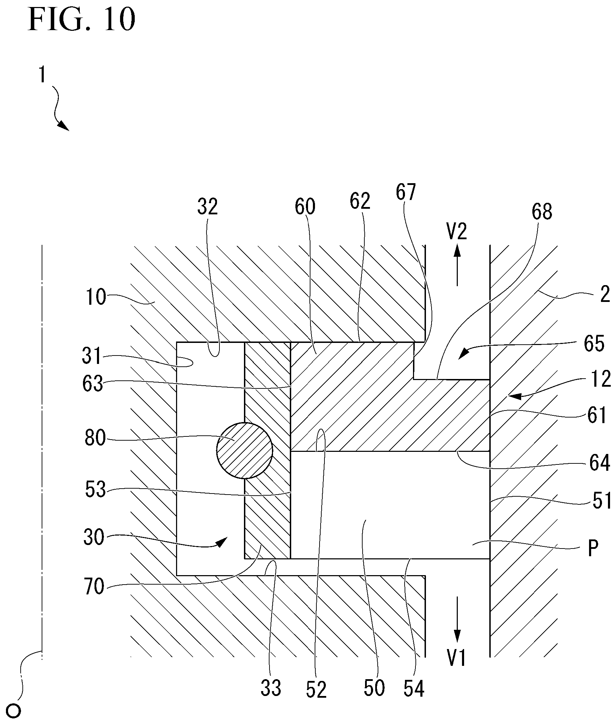

As a third modification example of the low-pressure side ring 60, a configuration shown in FIG. 10 can also be employed. In the example of FIG. 10, the notch surface 65 has a first surface 67 and a second surface 68. The first surface 67 faces the outer-peripheral side. The second surface 68 spreads from an end edge of the first surface 67 on the high-pressure side toward the outer-peripheral side. As an example, the first surface 67 and the second surface 68 are orthogonal to each other, in the cross-sectional view including the axis O. This modification example can be employed in combination with any of the first to third embodiments described above.

With the above configuration, the notch surface 65 has a cross-sectional shape that is rectangular with the first surface 67 and the second surface 68. Accordingly, visibility of the notch surface 65 itself is improved. That is, it is possible to easily visually recognize which surface the notch surface 65 is formed on. Therefore, it is possible to realize efficiency improvement and acceleration of the assembly work. Further, it is possible to reduce the possibility of malfunction or the like of a final product due to an error in assembly.

### <Other Modification Examples>

Furthermore, in each of the above embodiments, the example in which the reciprocating pump 100 is used to compress the liquid hydrogen has been described. However, the reciprocating pump 100 can also be suitably used for compression of lowtemperature liquefied gases such as liquefied carbon dioxide, liquefied natural gas, and liquefied petroleum gas.

### <Supplementary Note>

The reciprocating pump 100 described in each of the above embodiments is understood as follows, for example.
(1) A reciprocating pump 100 according to a first aspect includes a pump body 9 including a piston 1 that compresses liquid and a cylinder 2 that covers the piston 1 from an outer side, a drive unit 3 that causes the piston 1 to reciprocate in a reciprocating direction with respect to the cylinder 2, and a piston ring 12 provided in a gap between the piston 1 and the cylinder 2, in which an annular groove 30 that is concave toward an inner-peripheral side and extends in a circumferential direction of an outer-peripheral surface is formed on the outer-peripheral surface of the piston 1, a space in the cylinder 2 is partitioned, by the piston ring 12, into a high-pressure region V1 in which the compressed liquid flows and a low-pressure region V2 having a lower internal pressure than the high-pressure region V1, the piston ring 12 includes a high-pressure side ring 50 disposed on a high-pressure region V1 side in the annular groove 30, and a low-pressure side ring 60 provided on a low-pressure region V2 side in the annular groove 30 with respect to the high-pressure side ring 50, and a notch surface 65 that recedes toward the high-pressure region V1 side is formed on an end edge on an outer-peripheral side of a surface of the low-pressure side ring 60 facing the low-pressure region V2 side.

With the above configuration, the notch surface 65 is formed in advance in the region on the outer-peripheral side that is easily deformed by the pressure. Accordingly, even in a case where a high pressure is applied to the end edge on the outer-peripheral side, the deformation toward the low-pressure region V2 side can be allowed to a certain extent by an amount of the notch. Therefore, it is possible to reduce the possibility that a part of the low-pressure side ring 60 is pushed into the gap between the piston 1 and the cylinder 2.

(2) The reciprocating pump 100 according to a second aspect is the reciprocating pump 100 of (1), in which the notch surface 65 extends from the low-pressure region V2 side toward the high-pressure region V1 side as the notch surface 65 goes from the inner-peripheral side toward the outer-peripheral side.

With the above configuration, the notch surface 65 is formed in advance in the region on the outer-peripheral side that is easily deformed by the pressure. Accordingly, even in a case where a high pressure is applied to the end edge on the outer-peripheral side, the deformation toward the low-pressure region V2 side can be allowed to a certain extent by an amount of the notch. Therefore, it is possible to reduce the possibility that a part of the low-pressure side ring 60 is pushed into the gap between the piston 1 and the cylinder 2.

(3) The reciprocating pump 100 according to a third aspect is the reciprocating pump 100 of (1), in which the notch surface 65 has a convex curved-surface shape that is convex toward the low-pressure region V2 side.

With the above configuration, since the notch surface 65 has the convex curved-surface shape that is convex toward the low-pressure region V2 side, it is possible to avoid stress concentration in the notch surface 65.

(4) The reciprocating pump 100 according to a fourth aspect is the reciprocating pump 100 of (1), in which the notch surface 65 has a concave curved-surface shape that is concave toward the high-pressure region V1 side.

With the above configuration, since the notch surface 65 has the concave curved-surface shape that is concave toward the high-pressure region V1 side, it is possible to avoid the stress concentration in the notch surface 65.

(5) The reciprocating pump 100 according to a fifth aspect is the reciprocating pump 100 of (1), in which the notch surface 65 includes a first surface 67 facing the outer-peripheral side, and a second surface 68 that spreads from an end edge of the first surface 67 on the high-pressure region V1 side toward the outer-peripheral side.

With the above configuration, the notch surface 65 has a cross-sectional shape that is rectangular with the first surface 67 and the second surface 68. Accordingly, visibility of the notch surface 65 itself is improved. Therefore, it is possible to realize efficiency improvement and acceleration of the assembly work.

(6) The reciprocating pump 100 according to a sixth aspect is the reciprocating pump 100 of any one of (1) to (5), in which a dimension of the notch surface 65 in a radial direction is set within a range equal to or larger than a dimension of the gap in the radial direction and equal to or less than twice the dimension of the gap in the radial direction.

With the above configuration, a margin is provided, and thus it is possible to avoid the deformation of the low-pressure side ring 60 and the deterioration in the sealing performance caused by the deformation.

(7) The reciprocating pump 100 according to a seventh aspect is the reciprocating pump 100 of any one of (1) to (6), in which a dimension of the high-pressure side ring 50 in the reciprocating direction is set to be equal to or larger than 1.5 times a dimension of the low-pressure side ring 60 in the reciprocating direction.

With the above configuration, since the dimension of the high-pressure side ring 50 in the reciprocating direction is set to be larger than the dimension of the low-pressure side ring 60, rigidity of the high-pressure side ring 50 is improved. Accordingly, it is possible to reduce the likelihood of the deformation at the joint P.

(8) The reciprocating pump 100 according to an eighth aspect is the reciprocating pump 100 of any one of (1) to (7), in which a second notch surface 66 that recedes toward the low-pressure region V2 side is formed on an end edge on the outer-peripheral side of a surface of the low-pressure side ring 60 facing the high-pressure region V1 side.

With the above configuration, the second notch surface 66 is also formed on the surface facing the low-pressure region V2 side, in addition to the notch surface 65 formed on the surface facing the low-pressure region V2 side. Accordingly, it is possible to avoid the deterioration in the sealing performance, and it is not necessary to define the assembly direction of the low-pressure side ring 60 during the assembly work.

### INDUSTRIAL APPLICABILITY

According to the present disclosure, it is possible to provide the reciprocating pump including the piston ring that exhibits the higher sealing performance.

### REFERENCE SIGNS LIST

1 Piston
2 Cylinder
3 Drive unit
4 Casing
5 Check valve
6 Discharge pipe
7 Discharge valve
9 Pump body
10 Piston body
11 Wear ring
12 Piston ring
21 Compression chamber
30 Annular groove
31 Bottom wall surface
32 Low-pressure side wall surface
33 High-pressure side wall surface
41 Casing body
42 Supply pipe
43 Gas discharge pipe
44 Liquid storage chamber
50 High-pressure side ring
51 First outer-peripheral surface
52 First contact surface
53 First inner-peripheral surface
54 First bottom surface
60 Low-pressure side ring
61 Second outer-peripheral surface
62 Second contact surface
63 Second inner-peripheral surface
64 Second bottom surface
65 Notch surface
66 Second notch surface
67 First surface
68 Second surface
70 Backup ring
80 Spring member
100 Reciprocating pump
h Opening portion
O Axis
P Joint
V1 High-pressure region
V2 Low-pressure region

## Claims

1. A reciprocating pump comprising:
a pump body including a piston that compresses liquid and a cylinder that covers the piston from an outer side;
a drive unit that causes the piston to reciprocate in a reciprocating direction with respect to the cylinder; and
a piston ring provided in a gap between the piston and the cylinder,
wherein an annular groove that is concave toward an inner-peripheral side and extends in a circumferential direction of an outer-peripheral surface of the piston is formed on the outer-peripheral surface,
a space in the cylinder is partitioned, by the piston ring, into a high-pressure region in which the compressed liquid flows and a low-pressure region having a lower internal pressure than the high-pressure region,
the piston ring includes
a high-pressure side ring disposed on a high-pressure region side in the annular groove, and
a low-pressure side ring provided on a low-pressure region side in the annular groove with respect to the high-pressure side ring, and
a notch surface that recedes toward the high-pressure region side is formed on an end edge on an outer-peripheral side of a surface of the low-pressure side ring facing the low-pressure region side.

2. The reciprocating pump according to Claim 1,
wherein the notch surface extends from the low-pressure region side toward the high-pressure region side as the notch surface goes from the inner-peripheral side toward the outer-peripheral side.

3. The reciprocating pump according to Claim 1,
wherein the notch surface has a convex curved-surface shape that is convex toward the low-pressure region side.

4. The reciprocating pump according to Claim 1,
wherein the notch surface has a concave curved-surface shape that is concave toward the high-pressure region side.

5. The reciprocating pump according to Claim 1,
wherein the notch surface includes a first surface facing the outer-peripheral side, and a second surface that spreads from an end edge of the first surface on the high-pressure region side toward the outer-peripheral side.

6. The reciprocating pump according to any one of Claims 1 to 5,
wherein a dimension of the notch surface in a radial direction is set within a range equal to or larger than a dimension of the gap in the radial direction and equal to or less than twice the dimension of the gap in the radial direction.

7. The reciprocating pump according to any one of Claims 1 to 5,
wherein a dimension of the high-pressure side ring in the reciprocating direction is set to be equal to or larger than 1.5 times a dimension of the low-pressure side ring in the reciprocating direction.

8. The reciprocating pump according to any one of Claims 1 to 5,
wherein a second notch surface that recedes toward the low-pressure region side is formed on an end edge on the outer-peripheral side of a surface of the low-pressure side ring facing the high-pressure region side.
